(19) Europäisches Patentamt
European Patent Office
Office européen des brevets

(11) **EP 0 924 053 B1**

(12) **EUROPÄISCHE PATENTSCHRIFT**

(45) Veröffentlichungstag und Bekanntmachung des Hinweises auf die Patenterteilung:
**28.07.2004 Patentblatt 2004/31**

(51) Int Cl.7: **B29C 65/34**, G05D 23/00

(21) Anmeldenummer: **98123250.7**

(22) Anmeldetag: **07.12.1998**

(54) **Verwendung einer Elektro-Schweisseinrichtung**

Use of an electric welding apparatus

Utilisation d'un appareil de soudage électrique

(84) Benannte Vertragsstaaten:
**AT BE CH DE DK ES FI FR GB IT LI NL SE**

(30) Priorität: **18.12.1997 DE 19756273**
**23.04.1998 DE 19818130**

(43) Veröffentlichungstag der Anmeldung:
**23.06.1999 Patentblatt 1999/25**

(73) Patentinhaber: **Friatec Aktiengesellschaft**
**68229 Mannheim (DE)**

(72) Erfinder: **Baier, Ralf**
**68229 Mannheim (DE)**

(74) Vertreter: **Schmitt, Meinrad, Dipl.-Ing.**
**Reble, Klose & Schmitt**
**Patente & Marken**
**Postfach 12 15 19**
**68066 Mannheim (DE)**

(56) Entgegenhaltungen:
WO-A-97/20682          DE-A- 19 751 400
FR-A- 2 572 326        US-A- 4 918 292
US-A- 5 620 625

• PATENT ABSTRACTS OF JAPAN vol. 1998, no. 03, 27. Februar 1998 (1998-02-27) & JP 09 305215 A (SEKISUI CHEM CO LTD;MITSUBISHI PLASTICS IND LTD; RETSUKISU KOGYO KK), 28. November 1997 (1997-11-28)
• PATENT ABSTRACTS OF JAPAN vol. 1998, no. 01, 30. Januar 1998 (1998-01-30) & JP 09 239839 A (SEKISUI CHEM CO LTD), 16. September 1997 (1997-09-16)

**Beschreibung**

Die Erfindung bezieht sich auf die Verwendung einer Elektro-Schweißeinrichtung für Fittings und Rohre gemäß der im Oberbegriff des Patentanspruchs 1 angegebenen Merkmale.

Aus der US 4 918 292 ist eine derartige Elektro-Schweißeinrichtung mit einer Regeleinheit zur Beaufschlagung des Heizdrahtes des Fittings mit Strom bekannt. Gemäß einer ersten Ausführungsform ist eine erste minimale Temperatur vorgegeben, unterhalb welcher eine Schweißung nicht durchgeführt werden kann, sowie eine maximale Temperatur, welchem zur Vermeidung einer Zerstörung nicht überschritten werden darf. Diese Temperaturwerte sind in einem Speicher abgespeichert. Das Zeitintervall, in welcher die Temperatur zwischen den Temperaturwerten gehalten wird, wird nach einer Formel bestimmt, wobei zur Bestimmung des Zeitintervalls der Schweißphase ausgewählte Parameter und die Temperatur nach weiteren vorbekannten Formeln herangezogen werden. Ein Temperatursensor dient zur Erfassung der Temperatur zu Beginn der Schweißung und es wird eine zeitabhängige Regelung des Schweißprozesses durchgeführt. In einer weiteren Ausführungsform ist eine Regeleinheit mit einem Block für den Soll-Ist-Wertvergleich der Temperatur der Schweißzone vorgesehen, um in Abhängigkeit der Temperatur den Schweißstrom bzw. die Steuergröße zu korrigieren. Die von einem Sensor kontinuierlich erfaßte Temperatur wird mit den beiden in einem Speicher gespeicherten Temperatur-Soll-Werten verglichen und in Abhängigkeit davon wird die Steuergröße korrigiert.

Ferner ist aus der FR 2 572 326 eine Schweißeinrichtung bekannt, welche einen Temperatursensor zur Erfassung der Temperatur zu Beginn der Schweißung enthält. Zur Eingabe der Parameter des Fittings sind auf einer Karte Daten in Form eines Strichcodes gespeichert und in Abhängigkeit der Anfangstemperatur werden die auf der Karte gespeicherten Daten variiert, um das Schweißprogramm zu beeinflussen. Entsprechend des derart geänderten Schweißprogrammes wird die Schweißleistung über den Schweißstrom und die Schweißdauer geregelt. Eine Temperaturregelung mit einem Soll-Ist-Wertvergleich der Temperatur der Schweißzone wird nicht durchgeführt.

In der nicht vorveröffentlichten DE 197 51 400 A ist eine Elektro-Schweißeinrichtung beschrieben, gemäß welcher während des Füge- bzw. Schweißvorganges die Temperatur der Heizwendel bzw. des Heizdrahtes durch die Ermittlung des temperaturabhängigen Widerstandes bestimmt wird. Bei Erreichen einer vorgegebenen maximalen Temperatur wird die Heizwendel abgeschaltet oder die Heizleistung reduziert, und bei Unterschreiten einer vorgegebenen minimalen Temperatur wird die Heizwendel eingeschaltet oder die Heizleistung erhöht, wobei die Heizdauer in Abhängigkeit der Materialbeschaffenheit gewählt wird. Das Ein- oder Abschalten der Heizwendel bzw. der anliegenden Spannung erfolgt nach Art einer Zweipunkt-Regelung oder durch Reduzierung der angelegten Spannung. Das Erreichen der maximalen Temperatur ist das Kriterium zum Abschalten oder zur Reduzierung der Spannung bzw. der Stellgröße, wobei aber keine Erhöhung der Stellgröße erfolgt. Um ein unerwünschtes Überschwingen der Temperatur beim Erreichen der maximalen Temperatur zu vermeiden, kann für die angelegte Spannung bzw. die Stellgröße kein allzu hoher Wert vorgegeben werden, wodurch eine entsprechend lange Gesamt-Schweißzeit bedingt ist.

Schließlich ist aus der WO 97/20682 eine Schweißeinrichtung zum selbsttätigen Schweißen von Heizwendel-Fittings aus Kunststoff bekannt, deren Daten auf einem Datenträger gespeichert sind. Die Schweißleistungszufuhr an die Heizwendel wird aufgrund der vom Datenträger gelesenen Daten sowie unter Berücksichtigung der Umgebungstemperatur gesteuert. Die Heizwendel wird während einer vorgegebenen Vorwärm- und Entfeuchtungsdauer mit einer Vorwärmleistung beaufschlagt und auf eine gegenüber der Umgebungstemperatur erhöhte Temperatur gebracht, bei welcher der Kunststoff noch nicht plastifiziert wird. Die Vorwärmleistung ist gegenüber der Schweißleistung reduziert, welche nach Ablauf der Vorwärm- und Entfeuchtungsdauer zugeführt wird. Die Schweißleistung wird entsprechend den Daten des Datenträgers gesteuert, wobei Korrekturfaktoren wie beispielsweise die Umgebungstemperatur zur Variation der Schweißzeit berücksichtigt werden. Die auf dem Datenträger gespeicherten Daten oder Parameter sind vorgegebene Werte, welche in der Praxis auf Erfahrungswerten basieren, wobei die tatsächlichen Werte des jeweiligen Fittings, insbesondere infolge von Fertigungstoleranzen, Schwankungen unterliegen. So ist der Widerstand der Heizwendel bzw. des Heizdrahtes nicht nur von seiner metalurgischen Zusammensetzung abhängig, sondern auch vom Drahtdurchmesser und der Gesamtlänge, wobei für die Serienfertigung mehr oder minder große Schwankungsbreiten zu berücksichtigen ist. Durch derartige Schwankungen oder Veränderungen, sei es des Fittings oder der Randbedingungen des Schweißvorganges, ergeben sich Schwierigkeiten hinsichtlich der Reproduzierbarkeit der Schweißergebnisse der jeweiligen Fittings und letztlich der Schweißgüte.

Hiervon ausgehend liegt der Erfindung die Aufgabe zugrunde, die Schweißeinrichtung der genannten Art einer Verwendung dahingehend zu zuführen, daß die Schweißgüte der Schweißverbindung verbessert wird und der Einfluß von Toleranzen oder Umgebungsbedingungen auf ein Minimum reduziert wird. Die verwendete Elektro-Schweißeinrichtung soll einen geringen Fertigungsaufwand erfordern und bei optimierter Wirtschaftlichkeit eine hohen Sicherheitsanforderungen entsprechende Schweißung ermöglichen.

Die Lösung dieser Aufgabe erfolgt gemäß den Merkmalen des Patentanspruchs 1.

Die erfindungsgemäß vorgeschlagene Verwendung der Elektro-Schweißeinrichtung ermöglicht mit geringem Aufwand und hoher Funktionssicherheit die Herstellung einer Schweißverbindung zwischen Fitting, Rohr oder dergleichen. Die Verwendung der Elektro-Schweißeinrichtung ist zur Verbindung eines Rohres mit einem Fitting gleichermaßen geeignet wie zur Verbindung eines Formkörpers mit einem anderen Formkörper, der direkten Verbindung von zwei Rohren, der Verbindung eines Formkörpers mit einem Rohr oder zur Verbindung von sonstigen Bauteilen aus schweißbarem Kunststoff. Obgleich in einer zweckmäßigen Ausgestaltung der mit Strom beaufschlagbare Heizdraht in das Fitting oder den Formkörper integriert ist, und zwar insbesondere in derjenigen Fläche, welche mit dem anderen Kunststoffkörper verschweißt ist, kann der Heizdraht auch Bestandteil eines separaten Baukörpers sein, mit dessen Hilfe das Fitting, der Formkörper, das Rohr oder dergleichen miteinander zu verbinden sind. Durch die direkte Regelung der Temperatur der Schweißzone wird der Schweißprozeß permanent kontrolliert, wobei Fertigungstoleranzen und/oder Änderungen der Umgebungsbedingungen auf den Schweißprozeß selbst keinen weiteren Einfluß haben. Es erfolgt eine optimale Anpassung an die Umweltbedingungen, so daß eine Schweißung bei extremen Umgebungstemperaturen möglich ist, ohne daß beispielsweise eine auf empirischen Werten basierende Temperaturkompensation erforderlich wird. Die umgesetzte oder direkt erfaßte Temperatur der Schmelzzone wird in der Regeleinheit des Schweißgerätes verarbeitet und mittels der Regeleinheit wird die Stellgröße derart geregelt, daß zu jedem Zeitpunkt des Schweißvorganges die Temperatur der Schmelzzone zur optimalen Verschweißung gewährleistet ist.

In Abhängigkeit der Temperatur des Fittings oder dergleichen wird in zweckmäßiger Weise über die Regeleinheit die Steuergröße korrigiert. Als Steuergrößen zum Erreichen und/oder Vorgeben einer optimalen Schweißtemperatur können Spannung, Strom, Leistung oder Energie vorgegeben werden. Während des Meß- und Rechenzyklus des Regelkreises und der Erfassung des Temperatur-Istwertes wird die Steuergröße bedarfsweise konstant gehalten oder aber intervallmäßig ab- und zugeschaltet. In zweckmäßiger Weise gelangt ein Reglersystem zum Einsatz, welches Multitasking ermöglicht und beispielsweise einen Mikroprozessor, Mikrokontroller oder integrierten Rechner aufweist. Beim Multitasking wird das Fitting bzw. das Heizelement auf eine fest vorgegebene Temperatur erwärmt, und in weiteren Tasks oder Arbeitszyklen werden die Temperatur gemessen oder errechnet, Sicherheitsüberprüfungen vorgenommen und die hieraus resultierende Steuergröße nachgeregelt. Des weiteren kann im Rahmen der Erfindung mittels einer zusätzlichen Sensorik überprüft werden, ob in definierter Schmelzzonenentfernung die Temperatur der Schmelzzone einen vorgegebenen Schwellwert erreicht hat. Auch kann die erwähnte Sensorik genutzt werden, um den Schweißvorgang definiert abzuschalten. Schließlich werden im Rahmen der Erfindung die maßgeblichen Parameter des Schweißvorganges protokolliert und archiviert, und zwar insbesondere die Schweiß-Temperatur, die Schweiß-Endtemperatur, der Schweiß-Temperaturverlauf, die Vorwärmzeit sowie Meßergebnisse über einen eventuellen Windungsschluß. Die Schweißeinrichtung enthält hierfür geeignete Mittel, wie Speicherelemente, Anschlußmöglichkeiten für einen Drucker oder dergleichen. Die bevorzugt in das Schweißgerät integrierte Regeleinheit kann als klassischer Regler, wie beispielsweise ein PDI-Regler, oder mittels Fuzzy-Logik realisiert sein.

Durch Überprüfung der Temperaturentwicklung des Heizelements können dynamische oder statische Windungsschlüsse zuverlässig erkannt werden, zumal eine Rückkontrolle über den Zustand vor einem derartigen Ereignis ermöglicht wird. In zweckmäßiger Weise kann insbesondere durch Vorgabe eines Toleranzbandes der Soll-Schweißtemperatur der Regelprozeß beim Verlassen des Toleranzbandes "eingefroren" werden. Insbesondere kann anschließend bei konstant gehaltener Steuergröße, beispielsweise der Schweißspannung, die weitere Temperaturentwicklung der Schmelzzone bzw. des Heizelements bevorzugt mittels einer in das Schweißgerät integrierten Prüfeinheit überprüft werden. Bleibt die Temperatur weiterhin außerhalb des Toleranzbandes, so kann nach einer vorgegebenen Zeit auf einen statischen Windungsschluß, eine Unterbrechung oder auf schlechte Übergangswiderstände geschlossen werden.

Die Erfassung des Temperatur-Istwertes des Fittings oder dergleichen erfolgt bevorzugt mittels physikalischer Drahteigenschaften oder einer Schmelzdrucksensorik oder magnetischer hochfrequenter Eigenschaften, insbesondere des Fittings, oder der Rauschthermometrie oder thermischen Rauschens. Ferner können im Rahmen der Erfindung die Abkühlzeiten des verschweißten Fittings, Formkörpers oder dergleichen exakt vorgegeben werden. Im Hinblick auf geringere Fertigungskosten können größere Toleranzen des Widerstands des Heizdrahtes zugelassen werden. Desweiteren möglicht die Erfassung des Ist-Wertes der Temperatur ohne besonderen Zusatzaufwand die Protokollierung der Schweißtemperatur.

Auf dem Datenträger oder Speicherelement des Fittings, Formkörpers oder dergleichen ist der Temperatur-Sollwert und in zweckmäßiger Weise der Temperaturkoeffizient des Heizdrahtes gespeichert. Desweiteren können Temperaturwerte für die Vorwärmung oder des gesamten Schweißvorganges gespeichert sein, wobei beispielsweise auch die Abkühlphase nach dem Schweißen kontrolliert werden kann. Auf dem Datenträger sind ferner die Zeiten für die Schweißung und gegebenenfalls der Vorwärmung gespeichert. Erreicht beispielsweise die Schweißtemperatur den vorgegebenen Sollwert, so wird während der gespeicherten und vom Datenträger ausgelesenen Schweißzeit die Temperatur des Heizelements bzw. des Fittings in der erforderlichen Weise geregelt.

Der Heizdraht bzw. das Heizelement dient in einer besonderen Ausgestaltung der Efindung nicht nur zur Erwärmung bei Strombeaufschlagung zur Erreichung der Schweißtemperatur, sondern gleichzeitig zur Umsetzung der Temperaturerfassung, insbesondere durch Ausnutzung der physikalischen Drahteigenschaften. Zu Beginn der Verschweißung wird erfindungsgemäß zunächst mittels eines Temperatursensors die Temperatur des Heizelements erfaßt. Nachfolgend wird entsprechend den physikalischen Drahteigenschaften, und zwar vor allem unter Berücksichtigung des Temperaturkoeffizienten, ein normierter Widerstand, insbesondere bei 20° C errechnet. Mittels exakt vorgegebenen Parametern des Datenträgers oder Speicherelements, beispielsweise in Form eines Barcodes, können nunmehr unter Zugrundelegung des normierten Widerstandes die exakten Temperaturwerte im Bereich der Schmelzzone zu jedem Zeitpunkt der Verschweißung in Echtzeit ermittelt werden, sei es direkt oder über eine Erfassung der Strom- oder Spannungswerte.

Weiterbildungen und besondere Ausgestaltungen der Erfindung sind in den Unteransprüchen sowie der nachfolgenden Beschreibung angegeben.

Die Erfindung wird an Hand der in der Zeichnung dargestellten Ausführungsbeispiele näher erläutert, ohne daß insoweit eine Beschränkung erfolgt. Es zeigen:

Fig. 1    ein Blockschaltbild der Schweißeinrichtung,

Fig. 2    ein Temperaturdiagramm einer Schweißung,

Fig. 3    ein Flußdiagramm.

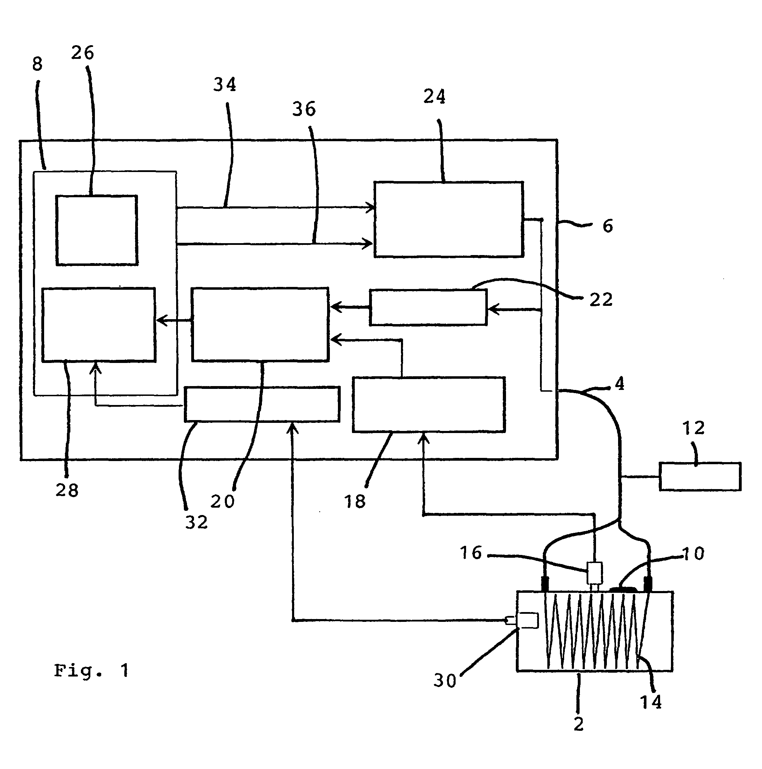

Fig. 1 zeigt beispielshaft ein Blockschaltbild für eine spannungsgeführte Temperaturregelung eines Fittings 2. Das Fitting 2 ist über ein Kabel 4 mit einem Elektro-Schweißgerät 6 verbunden, welches eine Regeleinheit 8 enthält. Mit dem Fitting 2 ist ferner ein Datenträger 10 gekoppelt, dessen gespeicherte Daten mittels einer Leseeinheit 12 gelesen und dem Schweißgerät zugeführt werden können. Der Datenträger 10, welcher insbesondere als Strichcode ausgebildet und auf der Außenfläche des Fittings 2 fest angeordnet ist, enthält die spezifischen Daten oder Parameter, welche zur Beeinflussung des Schweißvorganges im Elektro-Schweißgerät 6 und insbesondere der Regeleinheit 8 berücksichtigt werden. Das Fitting 2 enthält in bekannter Weise einen Heizdraht 14, und zwar in Form einer Heizwendel, durch welche zum Schweißen in bekannter Weise der Schweißstrom fließt. Gemäß Zeichnung ist das Fitting 2 als Muffe zum Verschweißen von Rohrenden ausgebildet, doch kann das Fitting 2 im Rahmen der Erfindung auch als Armatur, Sattelstück oder dergleichen ausgebildet sein, welches auf das Rohr außen aufgesetzt und durch Schweißen mit diesem verbunden wird.

Es ist ferner ein Temperatursensor 16 vorgesehen, welcher bevorzugt zur Erfassung der Anfangstemperatur des Heizdrahtes 14 zu Beginn der Schweißung und gegebenenfalls vor Beginn einer Vorwärmung des Fittings dient. Die mit dem Temperatursensor 16 erfaßte Anfangstemperatur wird gemäß Block 18 im Schweißgerät 6 für die Recheneinheit 20 bereit gehalten, welche zur Errechnung der Drahttemperatur vorgesehen ist. Zusätzlich oder alternativ kann gemäß Block 18 das Schweißgerät einen Temperatursensor enthalten. Ferner ist eine Meßeinheit 22 vorgesehen, mittels welcher die Schweißspannung. der Schweißstrom und der Widerstand des Heizdrahtes 14 des Fittings 2 meßbar sind. Des weiteren enthält das Schweißgerät 6 eine Leistungselektronik 24, mittels welcher bei einer spannungsgeführten Temperaturregelung die Schweißspannung vorgebbar ist. Es sei festgehalten, daß bei einer Stromregelung die Leistungselektronik dementsprechend ausgelegt ist. Die mittels der Leseeinheit 12 erfaßten fittingspezifischen Daten werden ebenso wie die Drahttemperatur, also der Temperatur-Istwert, der Regeleinheit 8 zugeführt, welche einen Rechner ebenso wie einen Speicher umfaßt. Wie mit dem Block 26 angedeutet, erfolgt in der Regeleinheit 8 der Soll-Istwertvergleich der Temperatur des Heizdrahtes. Mittels einer Prüfeinheit gemäß Block 28 erfolgt ferner eine Kontrolle, sowie Sicherheitsüberprüfung und Feststellung, ob gegebenenfalls ein Windungsschluß vorliegt. Der Temperaturkoeffizient des Heizdrahtes 14 ist im Rahmen der Erfindung auf den Datenträger 10 gespeichert. Des weiteren sind auf dem Datenträger 10 der Sollwert der Schweißtemperatur und gegebenenfalls auch der Vorwärmtemperatur gespeichert. Auch kann im Rahmen der Erfindung der Datenträger 10 Werte entsprechend des Ohm'schen Widerstandes des Heizdrahtes 14, der Schweißzeit und der Vorwärmzeit enthalten.

Ferner kann im Rahmen der Erfindung ein Temperatursensor 30 zur Erfassung der Schmelztemperatur des Fittings 2 vorgesehen sein. Mittels der Sensorik bzw. des Temperatursensors 30 erfolgt die Überprüfung, ob in definierter Entfernung von der Schmelzzone die Temperatur des Heizdrahtes und somit der Schmelze einen vorgegebenen Schwellwert erreicht hat. Gemäß Block 32 wird die direkt erfaßte Temperatur des Fittings bzw. der Schmelze der Regeleinheit 8 zugeführt, um entsprechend dem vorgegebenen Temperatur-Sollwert über die Stellgröße, während der Schweißung und gegebenenenfalls der Vorerwärmung die Fitting- bzw. Schmelztemperatur zu regeln. Schließlich kann die erläuterte Temperatursensorik zum definierten Abschalten des Schweißvorganges genutzt werden.

Die gemäß Block 20 umgesetzte oder gemäß Block 32 über den Temperatursensor 30 direkt erfaßte Temperatur der Schmelzzone wird als Temperatur-Istwert der Regeleinheit 8 zur Temperaturregelung entsprechend dem Temperatur-Sollwert geregelt. Das Schweißgerät und insbesondere dessen Regeleinheit 8 ist in zweckmäßiger Weise derart ausgebildet, daß durch Multitasking das Fitting 2 auf die fest vorgegebene Temperatur erwärmt wird, während in anderen Tasks die Temperatur gemessen oder errechnet wird, Sicherheitsüberprüfungen durchgeführt sowie die resultierende Steuergröße nachgeregelt werden. Es sei an dieser Stelle festgehalten, daß als Steuergrößen zum reichen einer optimalen Schweißtemperatur Spannung, Strom, Leistung und Energie vorgesehen werden können. Ferner kann im Rahmen der Erfindung während des Meßund Rechenzyklus des Regelkreises und der Erfassung des Temperatur-Istwertes die jeweilige Steuergröße konstant gehalten oder aber intervallmäßig ab- und zugeschaltet werden. Entsprechende Signale 34 werden von der Regeleinheit 8 an die Leistungselektronik 24 gegeben. Im Falle einer spannungsgeführten Temperaturregelung entspricht das Signal 34 der Vorgabe eines Spannungswertes. Weiterhin wird ein Signal 36 entsprechend der Schweißdauer bzw. des Endes der Schweißzeit an die Leistungselektronik 24 gegeben.

In zweckmäßiger Weise erfolgt die Integration der Vorwärmung in das erfindungsgemäße Regelverfahren. Hierbei werden wenigstens zwei unterschiedliche Temperaturwerte vorgegeben, insbesondere ein erster Wert für die Vorwärmung von beispielsweise 90° C und ferner ein zweiter Wert für die Schweißtemperatur beispielsweise von 220° C. Der erste Wert für die Vorwärmung wird in besonders zweckmäßiger Weise derart vorgegeben, daß ein Luftspalt zwischen der Innenfläche des Fittings 2 und der Außenfläche des Rohres überbrückt wird. Somit kann das Verbindungselement auch bei extremen Umgebungstemperaturen funktionssicher verschweißt werden. Dies gilt gleichermaßen für niedrige Temperaturen, beispielsweise für Umgebungstemperaturen < 0°, ebenso wie für Temperaturen von 40° oder darüber.

Des weiteren kann im Rahmen der Erfindung bei aktiver Vorwärmung die Erkennung oder Sensierung der Schließung oder Überbrückung des Luftspaltes erfaßt werden. Dies erfolgt insbesondere durch die Überprüfung der zugeführten Energie, Leistung oder des Stromes während der Temperaturregelung. Es wurde erkannt, daß während der Vorwär mung aufgrund der Temperaturregelung auf eine konstante Temperatur von beispielsweise 80° C durch Überprüfung des Verlaufes der Energie, Leistung oder des Stromes beim Schließen des Luftspaltes eine signifikante Änderung des überprüften Wertes eintritt, so daß danach die eigentliche Schweißung ausgehend von optimalen und von den Randbedingungen weitgehend unabhängigen Anfangsbedingungen durchgeführt werden kann. Darüber hinaus kann im Rahmen der Erfindung die Vorwärmung ohne Sensierung einer Schließung des Luftspaltes erfolgen, und zwar durch definiert vor gegebenen Vorwärmzeiten. Die Vorwärmzeiten werden hierbei fest vorgegeben und in zweckmäßiger Weise auf dem Datenträger 10 gespeichert. Die Vorwärmzeit wird bevorzugt abhängig von der Dimension des Fittings und / oder der Vorwärmtemperatur vorgegeben.

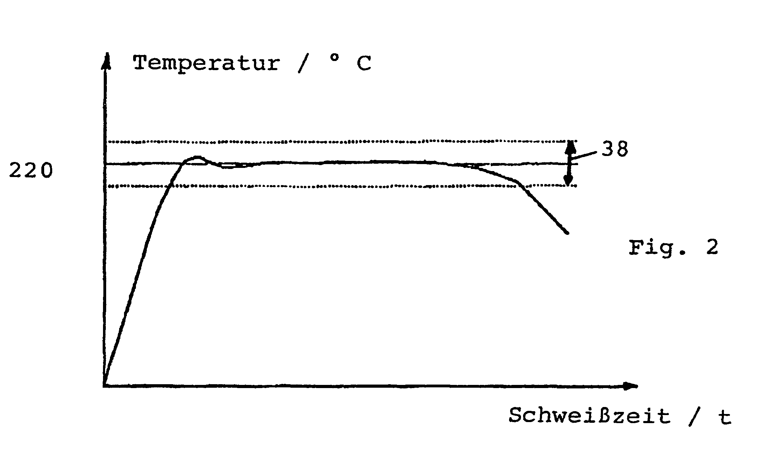

Fig. 2 zeigt schematisch ein typisches Temperaturdiagramm während einer Schweißung. Die erfindungsgemäße Elektro-Schweißeinrichtung regelt die Temperatur des Fittings und insbesondere der Schmelze beispielsweise auf eine konstante Temperatur von 220° C. Durch die Überprüfung der Temperaturentwicklung des Heizelements und Rückkontrolle oder Vergleich mit zuvor erfaßten Werten, kann ein dynamischer oder statischer Windungsschluß erkannt werden. Erfindungsgemäß wird der Temperaturverlauf erfaßt und zumindest zeitweise gespeichert, um die Überprüfungen und Kontrollen mit dem jeweiligen momentanen Wert zu ermöglichen. Zweckmäßig wird ein Toleranzband 38 der Soll-Schweißtemperatur vorgegeben und beim Verlassen dieses Toleranzbandes wird der Regelprozeß eingefroren. Nachfolgend wird bei konstant gehaltener Steuergröße, wie beispielsweise der Schweißspannung, der weitere Verlauf der Temperatur des Fittings oder des Heizdrahtes überprüft. Verbleibt die Temperatur außerhalb der Toleranz, kann nach vorgegebener Zeit auf einen statischen Windungsschluß, eine Unterbrechung oder auf einen schlechten Übergangswiderstand, insbesondere vom Schweißkabel 4 auf den Heizdraht 14 bzw. das Heizelement des Fittings geschlossen werden.

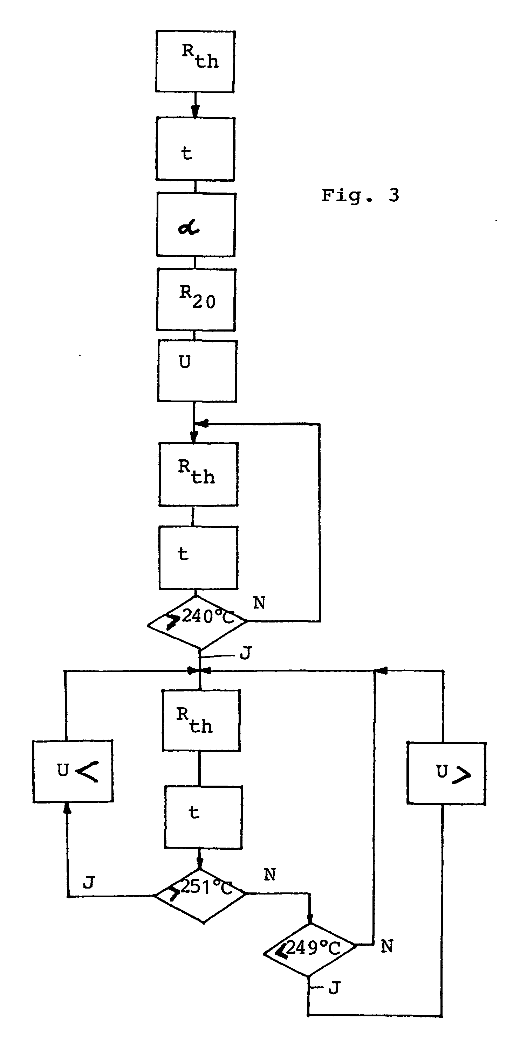

An Hand des in Fig. 3 beispielshaft dargestellten Flußdiagramms soll eine zweckmäßige Bestimmung der Temperatur des Heizdrahtes bzw. des Heizelements erläutert werden. Zunächst wird der Momentanwert des Widerstandes $R_{th}$ des Heizdrahtes gemessen. Mittels des erwähnten Temperatursensors 16 wird ferner zu Beginn der Verschweißung die Temperatur t des Heizdrahtes 14 erfaßt. Der bevorzugt auf dem Datenträger 10 gespeicherte Temperaturkoeffizient des Heizdrahtes wird mittels der Leseeinheit 12 ausgelesen und zur Berechnung eines auf vorzugsweise 20° C normierten Widerstandes $R_{20}$ herangezogen. Der normierte Widerstand $R_{20}$ wird berechnet nach folgender Formel:

$$R_{20} = R_{th} / [1 + \alpha \cdot (t - 20° C)]$$

Nachfolgend wird der Schweißprozeß gestartet, und zwar im Falle einer spannungsgeführten Temperaturregelung durch Anlegen einer konstanten Schweißspannung. Während der Schweißung wird der Momentanwert $R_{th}$ des Widerstandes gemessen, entweder direkt oder über die Erfassung der Spannung bzw. des Stromes. Zu jedem Zeitpunkt der Verschweißung werden die exakten Istwerte der Temperatur des Heizdrahtes bzw. des Fittings in Echtzeit ermittelt, und zwar nach der Formel

$$t = [R_{th} / R_{20} + (\alpha \cdot 20° C)] / \alpha.$$

Die errechnete Temperatur t des Fittingdrahtes wird der Regeleinheit 8 zugeführt zum Vergleich, ob die vorgegebene erste Soll-Temperatur von beispielsweise 240° C erreicht ist oder nicht. Ist die Soll-Temperatur nicht erreicht, so wird entsprechend N (also Nein) infolge der aktiven Regelung über die anliegende konstante Spannung das Fitting erwärmt. Bei Erreichen bzw. Überschreiten des ersten Temperatur-Sollwertes wird entsprechend J (also Ja) die Spannung geregelt. Fortlaufend werden der Momentanwert $R_{th}$ des Widerstands gemessen und der Temperatur-Istwert bestimmt. Dies erfolgt im Rahmen der Erfindung solange mit einer erhöhten Spannung, bis ein zweiter Temperatursollwert, und zwar bei diesem Ausführungsbeispiel von 249°, noch nicht überschritten ist. Wird dieser zweite Temperatur-Sollwert hingegen überschritten, ist also der Temperatur-Istwert nicht mehr kleiner als der zweite Temperatur-Sollwert bzw. 249°, so erfolgt die Spannungsversorgung nicht mehr über einen erhöhten Wert. Überschreitet schließlich der Temperatur-Istwert einen dritten Temperatur-Sollwert, der gemäß Ausführungsbeispiel mit 251° C vorgegeben ist, so wird die Schweißspannung reduziert. Durch diese Regelung und Vorgabe der Schweißspannung mit einem konstanten Wert, einem um einen vorgegebenen Betrag reduzierten sowie um einen vorgegebenen Betrag erhöhten Wert in Abhängigkeit von den beiden weiteren Temperatur-Sollwerten wird der Einfluß von Toleranzen oder Umgebungsbedingungen auf ein Minimum reduziert. Nach Ablauf der vorgegebenen Schweißzeit, welche gleichfalls im Datenträger gespeichert ist, wird die Schweißung beendet.

Entsprechend dem von anhand von Fig. 3 erläuterten Ausführungsbeispiel, gemäß welchem als Steuergröße die Schweißspannung konstant oder als um einen vorgegebenen Betrag reduzierter Wert sowie um einen vorgegebenen Betrag erhöhter Wert vorgegeben wird, können im Rahmen der Erfindung auch andere Steuergrößen wie Strom, Leistung oder Energie zur aktiven Regelung vorgegeben werden. Wesentlich ist, daß zunächst ein erster Temperatur-Sollwert eneicht bzw. überschritten sein muß, um nachfolgend erfindungsgemäß in Abhängigkeit von zwei weiteren Temperatur-Sollwerten die Steuergröße in der erläuterten Weise zu erhöhen oder zu erniedrigen.

**Bezugszeichen**

| | |
|---|---|
| 2 | Fitting |
| 4 | Kabel |
| 6 | Elektro-Schweißgerät |
| 8 | Regeleinheit |
| 10 | Datenträger |
| 12 | Leseeinheit |
| 14 | Heizdraht |
| 16 | Temperatursensor |
| 18 | Block / Temperatursensor |
| 20 | Recheneinheit |
| 22 | Meßeinheit |
| 24 | Leistungselektronik |
| 26 | Block / Soll-Istwert-Vergleich |
| 28 | Block / Prüfeinheit |
| 30 | Temperatursensor |
| 32 | Block / Schmelztemperatur |
| 34, 36 | Signal |
| 38 | Toleranzband |

**Patentansprüche**

1. Verwendung einer Elektroschweißeinrichtung für Fittings (2) und Rohre aus Kunststoff, wobei das Fitting (2) einen mit Strom beaufschlagbaren Heizdraht (14) zur Erwärmung des Kunststoffes aufweist, enthaltend einen Datenträger (10), eine Regeleinheit (8) sowie eine Vorrichtung zur Erfassung eines Temperaturwertes, welcher der Regeleinheit (8) als Ist-Wert zuführbar ist, wobei zwei Temperatur-Sollwerte derart vorgegeben sind, dass über eine Stellgröße die Schweißzone auf eine vorgegebene Temperatur der optimalen Schweißung regelbar ist, wobei die Regeleinheit (8) einen derart ausgebildeten Block (26) für den Soll-Ist-Wertvergleich der Temperatur der Schweißzone enthält, dass in Abhängigkeit der Temperatur die Steuergröße korrigierbar ist,
**gekennzeichnet durch** die Verwendung derart, dass die Steuergröße nach dem Überschreiten der Temperatur über den ersten Temperatur-Soll-Wert bis zum zweiten Temperatur-Sollwert erhöht wird und wobei schließlich beim Erreichen eines dritten Temperatur-Sollwertes, welcher größer als der erste und zweite Temperatur-Sollwert ist, die Steuergröße reduziert wird.

2. Verwendung der Schweißeinrichtung nach Anspruch 1, **dadurch gekennzeichnet, daß** im Datenträger (10) des Fittings (2) der Temperatur-Sollwert und/oder der Temperatur-Sollwert für eine Vorwärmung sowie ein weiterer Sollwert für die Schweißung und/oder der zeitliche Verlauf des Temperatur-Sollwerts gespeichert sind.

3. Verwendung der Schweißeinrichtung nach Anspruch 1 oder 2, **dadurch gekennzeichnet, daß** für den oder die Temperatur-Sollwerte ein Toleranzband vorgegeben ist.

4. Verwendung der Schweißeinrichtung nach einem der Ansprüche 1 bis 3, **dadurch gekennzeichnet, daß** der Temperatur-Istwert aufgrund physikalischer Eigenschaften des Heizdrahtes (14), oder einer Schmelzdrucksensorik oder magnetischer, insbesondere hochfrequenter Eigenschaften oder gemäß der Rauschthermometrie oder des thermischen Rauschens erfaßt wird und/oder daß insbesondere der zeitliche Verlauf des Temperatur-Istwerts gespeichert wird.

5. Verwendung der Schweißeinrichtung nach einem der Ansprüche 1 bis 4, **dadurch gekennzeichnet, daß** die Regeleinheit (8) für Multitasking ausgelegt ist, wobei zum einen die Erwärmung auf die fest vorgegebene Soll-Temperatur erfolgt, zum anderen die Temperatur gemessen und / oder errechnet wird, ferner Sicherheitsprüfungen durchgeführt und schließlich die resultierende Stellgröße nachgeregelt werden.

6. Verwendung der Schweißeinrichtung nach einem der Ansprüche 1 bis 5, **dadurch gekennzeichnet, daß** das Fitting (2), insbesondere dessen Datenträger (10), fest vorgegebene Regelparameter enthält, insbesondere die Schweißtemperatur und / oder die Vorwärmtemperatur und / oder den Temperaturkoeffizienten des Heizdrahtes und / oder eine Angabe zur Vorwärmung erfolgt oder nicht und / oder die Zeiten für die Schweißung und gegebenenfalls für die Vorwärmung.

7. Verwendung der Schweißeinrichtung nach einem der Ansprüche 1 bis 6, **dadurch gekennzeichnet, daß** während des Meß- und Regelzyklus des Regelkreises und der Erfassung des Istwertes der Temperatur die Stellgröße konstant gehalten wird oder aber intervallmäßig ab- und zugeschaltet wird.

8. Verwendung der Schweißeinrichtung nach einem der Ansprüche 1 bis 7, **dadurch gekennzeichnet, daß** der Datenträger (10) wenigstens eine Angabe zur Abkühlzeit des Fittings (2) enthält.

9. Verwendung der Schweißeinrichtung nach einem der Ansprüche 1 bis 8, **dadurch gekennzeichnet, daß** ein zusätzlicher Sensor (30), insbesondere ein Temperatursensor, vorgesehen ist, welcher einen definierten Abstand zur Schweißzone aufweist und / oder mittels welchem die Überprüfung und Feststellung des Erreichens eines vorgegebenen Schwellwertes der Temperatur der Schmelze in der Schweißzone vorgesehen ist.

10. Verwendung der Schweißeinrichtung nach einem der Ansprüche 1 bis 9, **dadurch gekennzeichnet, daß** in Abhängigkeit eines mittels des Sensors (30) erfaßten Signals der Schweißvorgang abschaltbar ist.

11. Verwendung der Schweißeinrichtung nach einem der Ansprüche 1 bis 10, **dadurch gekennzeichnet, daß** Mittel zur Protokollierung und Archivierung vorgesehen sind, um insbesondere die Schweiß-Temperatur, die Schweiß-Endtemperatur, den Schweiß-Temperaturverlauf, die Vorwärmzeit und Meßergebnisse über einen Windungsschluß zu erfassen.

## Claims

1. Use of an electric welding apparatus for plastics material fittings (2) and tubes, the fitting (2) comprising a heating wire (14) that may be charged with current for heating the plastics material, containing a data carrier (10), a control unit (8) and a device for recording a temperature value that may be supplied to the control unit (8) as an actual value, two temperature desired values being predetermined such that the welding zone may be adjusted to a predetermined temperature for optimum welding by means of a control variable, the control unit (8) containing a block (26) for comparing the desired/actual value of the temperature of the welding zone that is configured in such a way that the control variable may be corrected as a function of the temperature, **characterised by** the use such that, after the temperature has exceeded the first temperature desired value, the control variable is increased to the second temperature desired value, the control variable finally being reduced once a third temperature desired value, which is higher than the first and second temperature desired values, has been reached.

2. Use of the welding apparatus according to claim 1, **characterised in that** the temperature desired value and/or the temperature desired value for preheating, as well as a further desired value for welding and/or the time characteristic of the temperature desired value, are stored in the data carrier (10) of the fitting (2).

3. Use of the welding apparatus according to either claim 1 or claim 2, **characterised in that** a tolerance band is predetermined for the temperature desired value or values.

4. Use of the welding apparatus according to any one of claims 1 to 3, **characterised in that** the temperature actual value is detected on the basis of physical properties of the heating wire (14), or of a melting pressure sensing device, or of magnetic, in particular high-frequency, properties, or according to noise thermometry or thermal noise, and/or **in that**, in particular, the time characteristic of the temperature actual value is stored.

5. Use of the welding apparatus according to any one of claims 1 to 4, **characterised in that** the control unit (8) is configured for multitasking, heating taking place to the fixedly predetermined desired temperature, on the one hand, and the temperature being measured and/or calculated, on the other hand, safety checks also being carried out, and the resulting control variable finally being readjusted.

6. Use of the welding apparatus according to any one of claims 1 to 5, **characterised in that** the fitting (2), in particular the data carrier (10) thereof, contains fixed control parameters, in particular the welding temperature and/or the preheating temperature and/or the temperature coefficient of the heating wire, and/or a detail regarding preheating, which may or may not be predetermined, and/or the times for welding and optionally for preheating.

7. Use of the welding apparatus according to any one of claims 1 to 6, **characterised in that** the control variable is kept constant or alternatively is engaged and disengaged intermittently during the measurement and control cycle of the control loop and the recording of the actual value of the temperature.

8. Use of the welding apparatus according to any one of claims 1 to 7, **characterised in that** the data carrier (10) contains at least one detail regarding the cooling time of the fitting (2).

9. Use of the welding apparatus according to any one of claims 1 to 8, **characterised in that** an additional sensor (30), in particular a temperature sensor, which is at a defined distance from the welding zone and/or which monitors and detects when a predetermined threshold value of the melt temperature in the welding zone has been reached, is provided.

10. Use of the welding apparatus according to any one of claims 1 to 9, **characterised in that** the welding process may be disengaged as a function of a signal detected by the sensor (30).

11. Use of the welding apparatus according to any one of claims 1 to 10, **characterised in that** logging and filing means are provided, in particular for recording the welding temperature, the final welding temperature, the welding temperature characteristic, the preheating time and measurement results, using a shorted coil.

## Revendications

1. Utilisation d'un appareil de soudage électrique pour des montures (2) et des tubes en matière plastique, la monture (2) présentant un filament chauffant (14) pouvant être parcouru par un courant pour chauffer la matière plastique, comprenant un support (10) de données, une unité de régulation (8) ainsi qu'un dispositif pour mesurer une valeur de température qui peut être envoyée à l'unité de régulation (8) en tant que valeur réelle, deux valeurs de consigne de la température étant imposées de telle manière que, par l'intermédiaire d'une grandeur de réglage, la zone de soudage peut être régulée à une température prédéterminée de soudage optimal, l'unité de régulation (8) comprenant un bloc (26) pour la comparaison consigne-réel de la température de la zone de soudage qui est conformé de telle manière que la grandeur de commande peut être corrigée en fonction de la température,
   *caractérisée par* une utilisation de telle manière qu'après le dépassement de la température au-delà de la première valeur de consigne de température, la grandeur de commande est augmentée jusqu'à la deuxième valeur de consigne de température et, enfin, quand on atteint une troisième valeur de consigne de température qui est supérieure à la première et à la deuxième valeurs de consigne de température, la grandeur de commande est réduite.

2. Utilisation de l'appareil de soudage selon la revendication 1, *caractérisée en ce que* la valeur de consigne de température et/ou la valeur de consigne de température pour un préchauffage ainsi qu'une autre valeur de consigne pour le soudage et/ou le profil temporel de la valeur de consigne de température sont enregistrées dans le support de données (10) de la monture (2).

3. Utilisation de l'appareil de soudage selon la revendication 1 ou 2, *caractérisée en ce qu'*une bande de tolérance est imposée pour la ou les valeurs de consigne de température.

4. Utilisation de l'appareil de soudage selon l'une quelconque des revendications 1 à 3, *caractérisée en ce que* la valeur réelle de température est mesurée à partir de propriétés physiques du filament chauffant (14), ou d'un capteur de pression de fusion ou de propriétés magnétiques, en particulier à haute fréquence, ou à partir de la thermométrie de bruit ou du bruit thermique, et/ou *en ce qu'*on enregistre en particulier le profil temporel de la valeur réelle de la température.

5. Utilisation de l'appareil de soudage selon l'une quelconque des revendications 1 à 4, *caractérisée en ce que* l'unité de régulation (8) est conçue pour le multitâche, le chauffage jusqu'à la température de consigne imposée fixement s'effectuant d'une part, et d'autre part la température étant mesurée et/ou calculée, tandis que des contrôles de sécurité sont conduits de plus et, enfin, la grandeur de réglage en résultant est réajustée.

6. Utilisation de l'appareil de soudage selon l'une quelconque des revendications 1 à 5, *caractérisée en ce que* la monture (2), en particulier son support de données (10) contient des paramètres de régulation imposés fixement, en particulier la température de soudage et/ou la température de préchauffage et/ou le coefficient de température du filament chauffant et/ou une indication du préchauffage effectué ou non et/ou les temps de soudage et éventuellement de préchauffage.

7. Utilisation de l'appareil de soudage selon l'une quelconque des revendications 1 à 6, *caractérisée en ce que,* pendant le cycle de mesure et de régulation du circuit de régulation et la mesure de la valeur réelle de la température, la grandeur de réglage est maintenue constante, ou bien arrêtée et mise en marche par intervalles.

8. Utilisation de l'appareil de soudage selon l'une quelconque des revendications 1 à 7, *caractérisée en ce que* le support de données (10) contient au moins une information sur le temps de refroidissement de la monture (2).

9. Utilisation de l'appareil de soudage selon l'une quelconque des revendications 1 à 8, *caractérisée en ce qu'*un capteur supplémentaire (30), en particulier un capteur de température, est prévu, qui présente une distance définie depuis la zone de soudage et/ou au moyen duquel le suivi et la constatation qu'on a atteint une valeur de seuil prédéterminée de la température de la matière fondue dans la zone de soudage sont prévus.

10. Utilisation de l'appareil de soudage selon l'une quelconque des revendications 1 à 9, *caractérisée en ce que* l'opération de soudage peut être arrêtée en fonction d'un signal relevé par le capteur (30).

11. Utilisation de l'appareil de soudage selon l'une quelconque des revendications 1 à 10, *caractérisée en ce que* des moyens de compte-rendu et d'archivage sont prévus, afin de mesurer en particulier la température de soudage, la température finale de soudage, le profil de température de soudage, la durée de préchauffage et les résultats de mesure par l'intermédiaire d'un court-circuit entre spires.

Fig. 1

Fig. 2

Fig. 3